# EUROPEAN PATENT APPLICATION

(11) **EP 4 550 152 A1**
(43) Date of publication of application: **07.05.2025**
(21) Application number: 23207038.3
(22) Date of filing: 31.10.2023
(51) Int. Cl.: G06F 11/36

(54) **METHOD AND SYSTEM FOR MANAGING TESTCASES IN TESTSUITE**

(71) Applicant: Siemens Aktiengesellschaft, 80333 München (DE)
(72) Inventor: MAHESH, M., 560069 Bangalore, Karnataka (IN)
(74) Representative: Horn Kleimann Waitzhofer Schmid-Dreyer Patent- und Rechtsanwälte PartG mbB

(57) **Abstract**

A testsuite management system (200) and a method for managing testcases in a testsuite. The method (100) includes determining a video of execution of a testcase of the testsuite, where the test suite comprises a plurality of testcases. The method also includes determining at least one key frame associated with the testcase from the recorded video and determining a set of binary hash codes for the at least one key frame. Further, the method also includes determining a duplicate of the testcase based on a comparison of the set of binary hash codes with a plurality of binary hash codes stored in a database (210) of the system (200) and de-duplicating by deleting the duplicate of the testcase from the database (210) of the system (200).

## Description

The present disclosure relates generally to test case management in projects, and more specifically to a method and system for managing testcases in a test suite by removing duplicates using video based de-duplication technique.

Generally, software engineering and development includes employing agile methodology for early risk visibility in a lifecycle of a project. As a result, role of regression testing in agile software development increases exponentially. When a size of a software application increases it also leads to an increase in a size of test suites and efforts required to maintain the test suites. Further, the test suites also increase over a period of time making manual optimization an arduous task. As a result, there are possibilities of duplicate testcases being created within the test suites. Deduplication by hand becomes implausible when the test suites are exceptionally large in size.

When an engagement lasts a long time with a company, test management activities run the risk of becoming cumbersome. Attrition, growth, and organizational changes all influence the productivity of the testing team. Also, it may be observed that testers who newly join the organization write testcases without verifying whether the testcases already exist or not leading to duplicate testcases in the test suites. As duplicates accumulate over time, maintaining test assets becomes increasingly difficult. Further, long running projects are also required to use new tools and technologies which also creates a possibility of duplication of testcases when they are written using different technologies. The duplicate testcases also lead to useless test execution time, increase test infrastructure cost and late feedback. Manually removing the duplicate testcases is a time-consuming and cumbersome task.

In some conventional methods and systems, the duplicate testcases are removed manually which makes the de-duplication process cumbersome, tedious and time consuming. It also consumes resources which can be deployed for other priority tasks in the organization. Further, some other conventional methods and systems use code coverage techniques to check if any test has already covered a code underneath. Then there are some other conventional methods and systems which use NLP techniques to check for existence of similar testcases in the testsuites. Also, various model-based techniques are also used to check if there exist duplicate testcases in the test suites. This is not desirable as some of them are complex to implement and all of them require huge amount of processing which is time consuming especially when there are large number of testcases in the testsuite.

In light of the above, there remains a need for an improved method of deduplication of the testcases in the testsuites to enhance the efficiency of testing the applications.

The present disclosure seeks to overcome the above-mentioned challenges by using artificial intelligence (AI) and machine learning (ML) techniques over video-based comparison of the new testcases with existing testcases to remove duplicate testcases. For every testcase in the testsuite a video of the testcase execution is recorded and the recording is examined. Further, a score is provided along with name of the existing testcase with which the new testcase matches. If the score is higher then there is match between the existing testcase and the newly created testcase, proving that the newly created testcase is a duplicate of the existing testcase. Further, the duplicate testcases are removed from the testsuite. Therefore, the revised approach enhances the efficiency of not only deduplication process but also optimizing the testing process.

The object of the present disclosure is achieved by a computer-implemented method for managing testcases in a testsuite by a system. The method includes determining a video of execution of a testcase of the testsuite, where the test suite comprises a plurality of testcases and determining at least one key frame associated with the testcase from the recorded video. The method also includes determining a set of binary hash codes for the at least one key frame and determining a duplicate of the testcase based on a comparison of the set of binary hash codes with a plurality of binary hash codes stored in a database of the system. Further, the method includes de-duplicating by deleting the duplicate of the testcase from the database of the system.

In one or more embodiments, determining the set of binary hash codes for the at least one key frame includes determining visual features associated with the testcase from the at least one key frame and determining the set of binary hash codes for the at least one key frame from a plurality of hashing functions based on the visual features.

In one or more embodiments, the method also includes storing the set of binary hash codes in the database.

In one or more embodiments, the plurality of binary hash codes is stored in plurality of hash tables in the database.

In one or more embodiments, determining the duplicate of the testcase based on the comparison of the set of binary hash codes with the plurality of binary hash codes stored in the database of the system includes determining the plurality of binary hash codes in the plurality of hash tables that are at a specific Hamming distance from each hash code and comparing each hash code of the set of binary hash codes with the plurality of binary hash codes. Further, the method includes determining a duplication score for each hash code of the set of binary hash codes based on a similarity of each hash code and the plurality of binary hash codes and determining the duplicate of the testcase based on the duplication score.

In one or more embodiments, the duplicate of the testcase is displayed with the duplication score and an identity of the testcase.

In one or more embodiments, each of the plurality of testcases is executed to display a visual modification on a system under test (SUT).

The object of the present disclosure is also achieved by a system for managing testcases in a testsuite. The system includes an interface configured to display a video of execution of a testcase of the testsuite, wherein the test suite comprises a plurality of testcases; a processor and a memory coupled to the processor. The memory comprises instructions which, when executed by the processor, configures the processor to record the video of execution of the testcase and determine at least one key frame associated with the testcase from the recorded video. The processor is configured to determine a set of binary hash codes for the at least one key frame; determine a duplicate of the testcase based on a comparison of the set of binary hash codes with a plurality of binary hash codes stored in a database of the system; and de-duplicate by deleting the duplicate of the testcase from the database of the system.

The object of the present disclosure is further achieved by a computer program code which, when executed by a processor, cause the processor to carry out steps of the aforementioned method.

The object of the present disclosure is further achieved by a computer program product comprising computer program code which, when executed by a processor, cause the processor to carry out steps of the aforementioned method.

Still other aspects, features, and advantages of the disclosure are readily apparent from the following detailed description, simply by illustrating a number of particular embodiments and implementations, including the best mode contemplated for carrying out the disclosure. The disclosure is also capable of other and different embodiments, and its several details may be modified in various obvious respects, all without departing from the scope of the disclosure. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:
FIG 1 is a flowchart representation of a computer-implemented method for managing testcases in a testsuite, in accordance with one or more embodiments of the present disclosure;
FIG 2 is a block diagram representation of a system for managing the testcases in the testsuite, in accordance with one or more embodiments of the present disclosure;
FIG 3 is an exemplary depiction of removing duplicate testcases from the testsuites, in accordance with one or more embodiments of the present disclosure;
FIG 4 is a flowchart representation of a method of recording phase of the testcase, in accordance with one or more embodiments of the present disclosure;
FIG 5 is an exemplary depiction of video comparison and deduplication of the testcase, in accordance with one or more embodiments of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for managing testcases in a testsuite are disclosed herein. In the following description, for the purposes of explanation, numerous specific details are set forth in order to provide a thorough understanding of the embodiments of the disclosure. It is apparent, however, to one skilled in the art that the embodiments of the disclosure may be practiced without these specific details or with an equivalent arrangement. In other instances, well-known structures and devices are shown in block diagram form in order to avoid unnecessarily obscuring the embodiments of the disclosure.

Conventional methods and systems for deduplication of the testcases are manual approaches which makes the process cumbersome and time consuming especially when there are a large number of testcases in the testsuite. Unlike to the conventional methods and the systems, the proposed solution uses video-based comparison for removal of the duplicate testcases form the testsuite. The proposed solution mimics human nature for removing the duplicate testcases form the testsuite.

Conventional methods and systems for deduplication of the testcases are language specific requiring the user to know the language in which the testcases are provided to be able to deduplicate. Unlike to the conventional methods and the systems, the proposed solution is not language specific as the language used to code the testcase are irrelevant as the duplicates are removed based on the recorded version of the executed test case. Therefore, the proposed solution is a simple and effective duplicate detection.

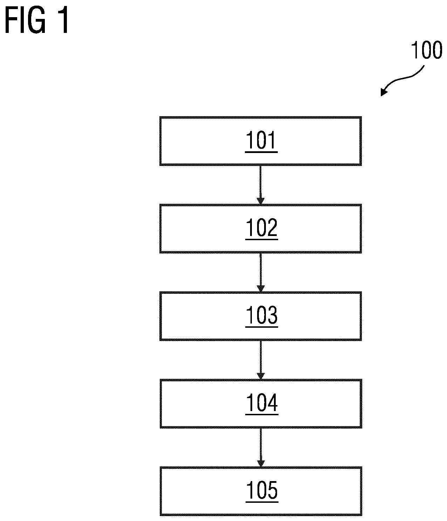

Referring now to FIG 1, illustrated is a flowchart of a method (as represented by reference numeral 100) for managing testcases in a testsuite by a system, in accordance with an embodiment of the present disclosure. As used herein, testsuite are logical grouping or collection of testcases to run a single job with different test scenarios. Here, managing the testcases - refers to determining and removing duplicate testcases from the testsuite based on a video recorded of execution of the testcases. This approach aims to manage the testcases in the testsuite by recording the video when each of the testcases are executed on a system under test (SUT) and then comparing the recorded video of the testcases to stored set of videos of previous testcases to identify if the current executed test case is already available in a database. If a duplicate of the currently executed test case is available in the database, then the duplicate is deleted from the database. As a result, each test case is stored only once in the database and any duplicate test case is eliminated on creation. This approach enhances the efficiency by removing the duplicate testcases which would have increased the memory usage and also decreased the processing speed.

As discussed, the present disclosure involves recording the video of execution of the testcase of the testsuite and determining a key frame associated with the testcase from the recorded video. The solution further includes determining a set of binary hash codes for the key frame; determining a duplicate of the testcase based on a comparison of the set of binary hash codes with a plurality of binary hash codes and de-duplicating by deleting the duplicate of the testcase. As a result, when the proposed solution is implemented for the deduplication of the testcases the language in which the testcases are coded does not matter as the deduplication is completely based on the video of the testcase executed. This enhances the overall operational efficiency, speed of the deduplication and also the amount of processing speed required for performing the deduplication.

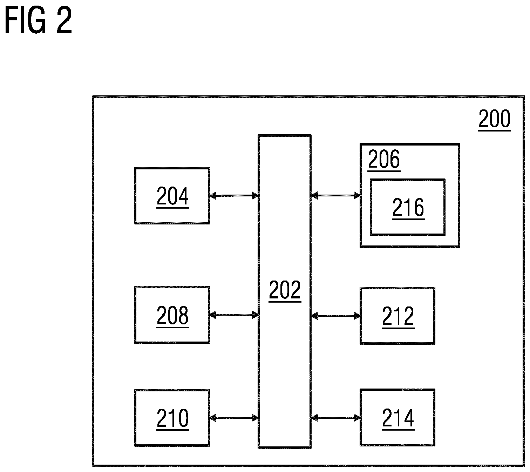

Referring to FIG 2, illustrated is a block diagram of a system 200 for managing the testcases in the testsuite, in accordance with one or more embodiments of the present disclosure. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product 200 programmed for performing the said purpose. The system 200 may be incorporated in one or more physical packages. By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes a processor 204 and a memory 206. Herein, the memory 206 is communicatively coupled to the processor 204. In an example, the memory 206 may be embodied as a computer readable medium on which program code sections of a computer program are saved, the program code sections being loadable into and/or executable in a system to make the system 200 execute the steps for performing the said purpose.

Generally, as used herein, the term "processor" refers to a computational element that is operable to respond to and processes instructions that drive the system 200. Optionally, the processor includes, but is not limited to, a microprocessor, a microcontroller, a complex instruction set computing (CISC) microprocessor, a reduced instruction set (RISC) microprocessor, an exceptionally long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory 206 may be volatile memory and/or non-volatile memory. The memory 206 may be coupled for communication with the processor 204. The processor 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that can be queried, analysed, and processed to support various applications and business processes. In the system 200, the database 210 provides mechanisms for storing, retrieving, updating, and deleting data, and typically includes features such as data validation, security, backup and recovery, and data modelling. The database 210 stores a plurality of binary hash codes associated with key frames from the video of the execution of the testcases.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200 in the metaverse environment. Further, the output device 214 may be in the form of a head mounted display (HMD) for example but not limited to HoloLens or smart goggles, etc. It is to be understood that, when reference is made in the present disclosure to the term "display" this refers generically either to a display screen on its own or to the screen and an associated housing, drive circuitry and possibly a physical supporting structure, of which all, or part of is provided for displaying information.

In the present system 200, the processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein for managing the testcases in the testsuite. In particular, the memory 206 includes a testcases management unit 216 to perform steps for managing the testcases in the testsuite. Also, in the system 200, the memory 206 may be configured to store the data associated with or generated by the execution of the inventive steps.

Referring to FIGS 1 and 2 in combination, the various steps of the method 100 as described hereinafter may be executed in the system 200, or specifically in the processor 204 of the system 200, for - managing the testcases in the testsuite. For purposes of the present disclosure, the managing the testcases in the testsuite present method 100 is embodied as an elimination algorithm for removal of the duplicate testcases. It may be appreciated that although the method 100 is illustrated and described as a sequence of steps, it may be contemplated that various embodiments of the method 100 may be performed in any order or a combination and need not include all of the illustrated steps.

In embodiments of the present disclosure, at step 101, the method 100 includes determining the video of execution of the testcase of the testsuite. The test suites are generally used to test software applications and software systems or features of the software applications and software systems. A test suite includes multiple testcases which includes set of conditions under which a test engineer determines whether the software applications and the software systems are functioning as per the objective of their design. Each of the testcases have a set of test data, preconditions, expected results and post conditions, developed for a particular test scenario in order to verify compliance against a specific requirement. In organization that develop, deploy, and test the software applications and the software systems, the test suites are generated and accumulated over a period of time. These testcases are exceptionally large in number and the number keeps increasing for every release of the software application and/or software systems. Over a period of time, it may not be possible for the test engineers to identify which of the testcases are current, which are obsolete, which need to be updated, how many are duplicates, etc. Whenever a major release of a software application and/or software system happens, the person/team finds it extremely hard to pick up a regression suite and execute it. Due to this, many defects get slipped through to production. Each of the testcases that is executed displays a visual modification on a system under test (SUT).

Consider an example of a test suite for a social networking application which may include systems for account creation, account deletion uploading multimedia content, viewing multimedia content, contact addition or removal, etc. As time progresses, the social networking application may decide to add additional parameters to the account creation, such as for example but not limited to inclusion of biometrics or linking of other applications, etc. The typical way of testing this will involve writing additional tests for the inclusion of biometrics and testing it, which will invalidate the existing suite of tests, for the account creation. Moreover, the suites of tests which depict a particular functionality do not depict a business flow and will be extremely hard to maintain, as the steps will be voluminous. In the proposed solution, every time a new testcase is executed, the execution is recorded as a video. As a result, there is record available for each of the testcase execution scenarios. There can be two scenarios here. One is a real-time scenario when the execution of the testcases is recorded and used for de-duplication. A second scenario is when the recorded video is stored in the database 210 and then pulled-up and used for the de-duplication of the testcases in the testsuite.

In embodiments of the present disclosure, at step 102, the method 100 includes determining key frames associated with the executed testcase from the recorded video. Here the key frames are extracted from the multiple frames of the video of the execution of the testcase. The key frame includes the most representative and significant frames that can describe the movement or main events in the video. These are representative frames of the video content, the frames that provide the most accurate and compact summary of the video content. In another example, the keyframe is a frame where a change occurs in the video timeline. The keyframes can be for example the frames comprising specific details associated with the testcase. For example, in the above example the key frames may be the frames which includes codes or steps describing the processes for account creation, account deletion uploading multimedia content, viewing multimedia content, contact addition or removal, etc.

In embodiments of the present disclosure, at step 103, the method 100 includes determining the set of binary hash codes for the key frame. The method includes determining visual features associated with the testcase from the key frame and determining the set of binary hash codes for the key frame from the hashing functions based on the visual features. The hash code is an integer value that is associated with each content/object in the key frame. The main purpose of hashing is to verify the integrity of the content in the key frame. Since the hash generated is unique to the input data, it acts as a unique fingerprint of the input data. The binary hash codes are then stored in hash tables in the database 210.

In embodiments of the present disclosure, at step 104, the method 100 includes determining a duplicate of the testcase based on a comparison of the set of binary hash codes with a plurality of binary hash codes stored in the database 210 of the system 200. The method includes determining the binary hash codes in the hash tables that are at a specific Hamming distance from each hash code and comparing each hash code with the binary hash codes which are already stored in the database 210. This may be performed using one or more artificial intelligence AI) or machine learning (ML) based models which compare, correlate, and identify the duplicate testcases based on the Hamming distance. The Hamming distance between two equal-length strings of hashes is the number of positions at which the corresponding hashes are different. Generally, duplicate copies of the image all have close hash values and hence helps in identifying the duplicate testcases.

Further, the method includes determining the duplication score for each hash code of the set of binary hash codes based on a similarity of each hash code and the binary hash codes and determining the duplicate of the testcase based on the duplication score. Here, the duplication score indicates the level of similarity between the hash code of the key frame of the test case that is being executed with the stored hash codes of the previous key frames executed. The duplicate of the testcase is displayed with the duplication score and an identity of the testcase on a screen of the system 200.

In embodiments of the present disclosure, at step 105, the method 100 includes de-duplicating by deleting the duplicate of the testcase from the database 210 of the system 200. Finally, the identified duplicate testcases are then deleted from the testsuite automatically without any manual intervention. In another example, the de-duplication can be done by moving the duplicate testcase out of the current testsuite and storing in a bin.

Therefore, the proposed solution provides improved mechanism of de-duplicating the testcase from the test suite without any manual intervention and increased speed. The processing speed is enhanced significantly as the duplicates are automatically deleted and hence the duplicate testcases which would otherwise have been executed and consumed resources are now eliminated. As a result, the resources are enow available and increases the speed of processing the testcases in the testsuite. The proposed solution does not require the tester to know the language in which the testcase is written to be able to de-duplicate the testcases in the testsuite as the proposed solution performs the de-duplication based on the recorded video of the execution of the testcases. As a result, the proposed solution is simple and can be easily, effectively implemented. Therefore, the proposed solution is extremely useful in quick and cost-effectively eliminating the duplicate testcases.

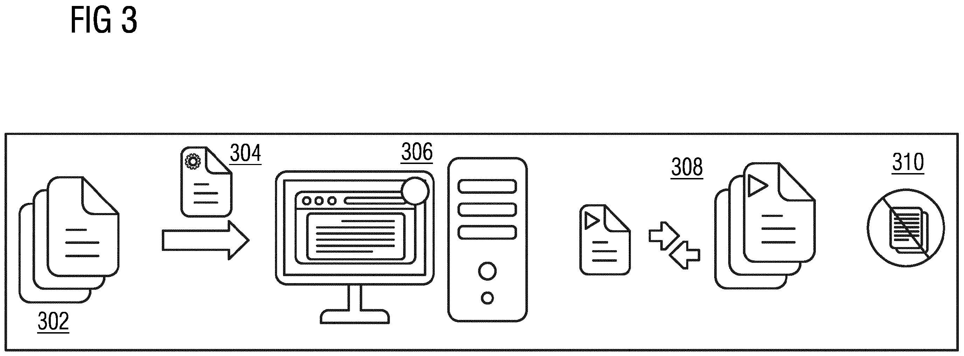

FIG 3 is an exemplary depiction of removing the duplicate testcases from the testsuites by the system 200, in accordance with one or more embodiments of the present disclosure. Referring to the FIG. 3, in the proposed disclosure the term testcases refer to cases which on execution exhibit visual modification that can be observed on the SUT (indicated by 302 and 304). For example. GUI testcases. This disclosure tries to provide a solution to remove duplicate testcases from the test suite. The proposed solution uses artificial intelligence (AI) and machine learning (ML) based techniques over video-based comparison to remove the duplicate testcases. Here, the ML model or a natural language processing technique may be used for eliminating the duplicate testcases based on learning over a period of time. For example, sentences such as "Unable to" and "Not able to" are same and may be identified in the keyframes based on training of the ML models over a period of time.

For example, consider a test case written for testing an employee management system in an organization. The testcase 304 may include a series of test steps for performing one or more functionalities of the application. At 306, for every testcase in the test suite the video of the testcase execution is recorded. The recorded video will have the functionalities of the application such as for example but not limited to verifying employee identity, verifying employee specific passwords, receiving leave requests, updating the employee records and etc. At 308, the recorded testcases are examined further by a duplicate matcher and provides a score along with name of the tescase it matches with. Higher the score, it is defnitely a match proving that the testcase is a duplicate. At 310, the duplicate testcases are removed from the testsuite 302. Therefore, in the proposed solution computational resources are saved by not executing duplicate testcases.

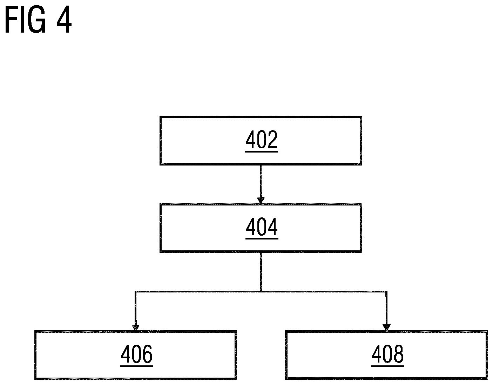

FIG 4 is a flowchart representation of a method of recording phase of the testcase, in accordance with one or more embodiments of the present disclosure. In embodiments of the present disclosure, at step 402, the method includes a tester manually executing the testcases using the system 200 to test the SUT. Here, when the testcases are executed the testcases exhibit visual modification that can be observed on the SUT. For example, the testcases can be the GUI testcases.

In embodiments of the present disclosure, at step 404, the method includes the system 200 records the steps manually executed by the tester. Further, at step 406, the system 200 generates the test script based on the execution of the testcases. Further, at step 408, another outcome of the method is the video recorded of the manual execution of the testcases. This video comprises the step-by step execution details of the testcases with each detail.

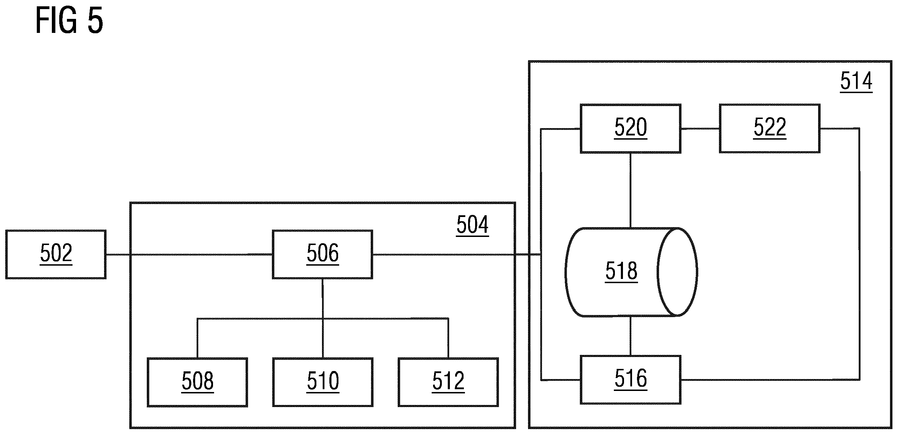

FIG 5 is an exemplary depiction of the video comparison and the deduplication of the testcase by the system 200, in accordance with one or more embodiments of the present disclosure. Referring to the FIG. 5, the proposed disclosure which deals with the deduplication of the testcase includes two major techniques of video hashing (as indicated in 504) and video archiving (as indicated in 514).

Consider at 502, the video of the execution of the test case is received by the system 200 and the video hashing 504 is initiated. The video hashing 504 includes processing the video 506 of execution of the testcases for determining the key frames in the video. At 508 the key frame extraction is performed by generating visual features via a Colour and Edge Directivity Descriptor (CEDD) approach for each key frame. At 510, the features are extracted from the extracted key frames and at 512 the key frames are coded to obtain the set of binary hash codes for the key frames from different hashing functions (as indicated by (516). Many different hash functions could be used here, such as projection-based or prototype-based functions.

At 520, the index construction is performed. This includes using multiple hash tables which provides high recall performance for big data search. Here, multiple hash tables are created based on the binary codes obtained above. This can be done by many mechanisms including but not limited to multi-index hashing and complementary hash tables. At step 516 video archiving is performed by using all the videos in the database and are represented as binary codes and imported into multiple hash tables.

Video deduplication: The given query video (i.e., 502) is first hashed to generate the set of binary codes for each key frame. Then, for each hash code all the buckets are checked in the corresponding hash table within a small Hamming distance of it, considering the videos containing the key frames in these buckets as candidate results. Then the key frames are ranked similarity, enabling duplicate videos to be easily detected.

Therefore, the proposed solution can efficiently find matches between the query video of the testcase execution and those in the database 210, rapidly identifying duplicate videos. The video generated by the system 200 is converted to hash and stored in the database 210. Finally, it can provide both online deduplication as well as offline deduplication. In the online deduplication the video of the testcase is compared on the fly with the existing videos (test suite) in the database 210 and provided information whether the query video is duplicate. In the offline version every video of the testcase is stored in the database 210 and later compared for duplication. The system 200 consists of four main components: video hashing, index construction, video archiving, and video deduplication as indicated above and effectively perform the de-duplication of the testcases without any manual intervention and at a higher speed compared to the existing mechanisms of de-duplication of the testcases.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

**Reference Numerals**

| | |
|---|---|
| method | 100 |
| step | 101 |
| step | 102 |
| step | 103 |
| step | 104 |
| step | 105 |
| system | 200 |
| bus | 202 |
| processor | 204 |
| memory | 206 |
| interface | 208 |
| database | 210 |
| input device | 212 |
| output device | 214 |
| testcases management unit | 216 |
| step | 302 |
| step | 304 |
| step | 306 |
| step | 308 |
| step | 310 |
| step | 402 |
| step | 404 |
| step | 406 |
| step | 408 |
| step | 502 |
| step | 504 |
| step | 506 |
| step | 508 |
| step | 510 |
| step | 512 |
| step | 514 |
| step | 516 |
| step | 518 |
| step | 520 |
| step | 522 |

## Claims

1. A computer-implemented method for managing testcases in a testsuite by a system (200), the method (100) comprising:
determining a video of execution of a testcase of the testsuite, wherein the test suite comprises a plurality of testcases;
determining at least one key frame associated with the testcase based on a content of the recorded video;
determining a set of binary hash codes for the at least one key frame;
determining a duplicate of the testcase based on a comparison of the set of binary hash codes with a plurality of binary hash codes stored in a database (210) of the system (200); and
de-duplicating the database (210), by deleting the duplicate of the testcase from the database (210) of the system (200).

2. The method (100) according to claim 1, wherein determining the set of binary hash codes for the at least one key frame comprises:
determining visual features associated with the testcase from the at least one key frame; and
determining the set of binary hash codes for the at least one key frame from a plurality of hashing functions based on the visual features.

3. The method (100) according to claim 1, further comprising:
storing the set of binary hash codes in the database (210).

4. The method (100) according to claim 1, wherein the plurality of binary hash codes is stored in plurality of hash tables in the database (210).

5. The method (100) according to claim 1, wherein determining the duplicate of the testcase based on the comparison of the set of binary hash codes with the plurality of binary hash codes stored in the database (210) of the system (200) comprises:
determining the plurality of binary hash codes in the plurality of hash tables that are at a specific Hamming distance from each hash code;
comparing each hash code of the set of binary hash codes with the plurality of binary hash codes;
determining a duplication score for each hash code of the set of binary hash codes based on a similarity of each hash code and the plurality of binary hash codes; and
determining the duplicate of the testcase based on the duplication score.

6. The method (100) according to claim 5, wherein the duplicate of the testcase is displayed with the duplication score and an identity of the testcase.

7. The method (100) according to claim 1, wherein each of the plurality of testcases is executed to display a visual modification on a system under test (SUT).

8. A system (200) for managing testcases in a testsuite, the system (200) comprising:
an interface configured to display a video of execution of a testcase of the testsuite, wherein the test suite comprises a plurality of testcases;
a processor (204); and
a memory (206) coupled to the processor (204), wherein the memory (206) comprises instructions which, when executed by the processor (204), configures the processor (204) to:
record the video of execution of the testcase;
determine at least one key frame associated with the testcase from the recorded video;
determine a set of binary hash codes for the at least one key frame;
determine a duplicate of the testcase based on a comparison of the set of binary hash codes with a plurality of binary hash codes stored in a database (210) of the system (200); and
de-duplicate by deleting the duplicate of the testcase from the database (210) of the system (200).

9. A computer program product, comprising computer program code which, when executed by a processor (204), cause the processor (204) to carry out the method (100) of one of the claims 1 to 7.

10. A computer-readable medium comprising a computer program product comprising computer program code which, when executed by a processor (204), cause the processor (204) to carry out the method (100) of one of the claims 1 to 7.
